# FASCICULE DE BREVET EUROPEEN

(11) **EP 3 810 919 B1**
(45) Date de publication et mention de la délivrance du brevet: **09.10.2024**
(21) Numéro de dépôt: 19742838.6
(22) Date de dépôt: 03.06.2019
(51) Int. Cl.: F02P 5/152

(54) **PROCEDE D'APPLICATION D'UNE DEGRADATION D'AVANCE A L'ALLUMAGE SELON UNE DUREE ENTRE DEUX DE CLIQUETIS**
METHOD FOR RETARDING THE IGNITION TIMING ACCORDING TO A DURATION BETWEEN TWO KNOCK EVENTS
VERFAHREN ZUM VERZÖGERN DES ZÜNDZEITPUNKTES ENTSPRECHEND EINER DAUER ZWISCHEN ZWEI KLOPFEREIGNISSEN

(30) Priorité: 20.06.2018 FR 1855417
(43) Date de publication de la demande: 28.04.2021
(73) Titulaire: Stellantis Auto SAS, 78300 Poissy (FR)
(72) Inventeur: GALLIENNE, Felix, 92250 LA GARENNE COLOMBES (FR); BRENOT, Sebastien, 25310 HERIMONCOURT (FR); HERAUD, Theotime, 92270 BOIS-COLOMBES (FR)
(86) Numéro de dépôt international: PCT/FR2019/051296
(87) Numéro de publication internationale: WO 2019/243685

(56) Documents cités:
- EP-A2- 0 420 445
- FR-A1- 3 048 265
- FR-A1- 3 049 010
- US-A- 4 539 957
- US-A- 4 971 007

## Description

La présente invention porte sur un procédé d'application d'une dégradation d'avance à l'allumage curative appliquée à un moteur thermique dès une détection de coup de cliquetis tenant compte d'une durée séparant deux coups de cliquetis successifs.

Selon l'état de la technique, il existe plusieurs procédés de correction de l'avance à l'allumage appliquée à un moteur thermique afin d'éviter les coups de cliquetis. Ces procédés reposent essentiellement sur un retrait d'avance forfaitaire pour éradiquer le coup de cliquetis lorsqu'il est détecté et effectuer une correction de l'avance. Cependant, il subsiste une diversité dans l'application de cette correction, qui amène des avantages et inconvénients selon les choix effectués.

A l'heure actuelle, deux différents types de procédé de correction de l'avance à l'allumage sont principalement en vigueur. Le premier type de procédé détermine une avance finale à appliquer lors du prochain cycle et le second type détermine une avance dite de base, étant la valeur minimale entre l'avance à l'allumage optimale et l'avance limite coup de cliquetis, les corrections et applications desdites avances étant gérées cylindre par cylindre.

Le premier type de procédé de correction de l'avance à l'allumage présente l'avantage d'être très sécuritaire mais son inconvénient est d'entraîner une perte de consommation et de performance, ces pertes étant dues au retrait régulier non justifié de l'avance à l'allumage.

Le second type de procédé présente l'avantage d'être plus efficace en termes de consommation et de performance moteur et l'inconvénient d'être moins sécuritaire, notamment en cas de fort besoin de correction.

Les deux types de procédé de correction de l'avance à l'allumage ont tous deux l'inconvénient commun de ne pas permettre une adaptation optimisée, leur adaptation étant lente et peu physique.

Ainsi dans l'état de la technique, en cas de détection d'un coup de cliquetis, une action curative est directement appliquée pour stopper le phénomène de combustion anormale et protéger le moteur. Cette action curative consiste à dégrader l'avance à l'allumage d'une valeur calibrable en fonction du régime et de l'intensité du coup de cliquetis.

L'application d'une action curative à chaque détection d'un coup de cliquetis n'est pas optimale. En effet, en cas de fausse détection d'un coup de cliquetis, une dégradation d'avance va être appliquée alors qu'en réalité il n'y avait pas de coup de cliquetis. Aussi, le coup de cliquetis est un phénomène qui peut se calmer de manière autonome sans action particulière. Il n'est donc pas toujours nécessaire d'appliquer une dégradation d'avance pour stopper le coup de cliquetis.

Le document FR-A-3 049 010 décrit un procédé de correction de l'avance à l'allumage qui comprend deux modes : une correction curative dès qu'un coup de cliquetis est détecté et une correction adaptative qui elle s'ajoute à une correction préventive. Cette correction adaptative relève d'un apprentissage. L'utilisation de cette correction adaptative a pour but de réduire le traitement curatif.

Avec une notion d'apprentissage, il n'y a pas d'action intervenant de manière systématique à chaque détection de coup de cliquetis et donc pas de protection immédiate du moteur sujet aux coups de cliquetis.

On connaît encore des documents US4971007A et US4539957A des procédés de correction de l'avance à l'allumage.

Par conséquent, le problème à la base de l'invention est de réaliser une adaptation de l'application d'une dégradation de l'avance à l'allumage curative d'apparition de coup de cliquetis spécifiquement élaborée pour n'être mise en oeuvre que si le phénomène de coup de cliquetis perdure.

Pour atteindre cet objectif, il est prévu selon l'invention un procédé d'application d'une dégradation d'avance à l'allumage curative d'une première valeur nominale prédéterminée pour un moteur thermique après une détection d'un premier coup de cliquetis lors du fonctionnement du moteur, l'application de la dégradation d'avance à l'allumage curative étant suspendue tant qu'un deuxième coup de cliquetis n'a été détecté dans un premier intervalle de temps prédéterminé débutant avec la détection du premier coup de cliquetis, comprenant une étape d'initiation d'un premier compte à rebours d'un premier intervalle de temps débutant avec l'apparition du premier coup de cliquetis, le premier compte à rebours étant remis à zéro si aucun deuxième coup de cliquetis n'a été détecté pendant le premier intervalle de temps ou dès qu'un deuxième coup de cliquetis a été détecté, après que le premier compte à rebours ait été remis à zéro, le prochain coup de cliquetis à venir deviendra le nouveau premier coup de cliquetis, caractérisé en ce que, simultanément au début du premier compte à rebours, il est débuté un deuxième compte à rebours d'un deuxième intervalle de temps inférieur au premier intervalle, ce deuxième compte à rebours servant à limiter en durée une dégradation d'avance à l'allumage curative d'une deuxième valeur minorée prédéterminée inférieure à la première valeur nominale prédéterminée mise en oeuvre dès qu'un deuxième coup de cliquetis a été détecté pendant le premier intervalle de temps en vigueur et non terminé et le deuxième intervalle terminé.

L'effet technique est d'obtenir une correction au plus près des conditions favorisant les coups de cliquetis et donc de ne pas corriger si cela n'est pas nécessaire. La présente invention prend en compte dans la correction curative appliquée l'intervalle de temps entre deux coups de cliquetis consécutifs. L'objectif est de corriger au plus juste l'avance à l'allumage pour protéger le moteur et ne pas dégrader la consommation de manière excessive.

L'invention consiste à optimiser l'action curative en cas de détection d'un coup de cliquetis en appliquant une dégradation d'avance uniquement lorsque le coup de cliquetis ne se calme pas sans action et ne permet pas de respecter naturellement le critère de 1 coup de cliquetis toutes les 10 secondes. Cette action curative est modulée en fonction de l'instant où le coup de cliquetis est détecté.

Lorsqu'un coup de cliquetis est détecté, un compte à rebours est activé et aucune action curative n'est appliquée. Si un second coup de cliquetis est détecté avant que le compte à rebours ne soit terminé, alors une dégradation d'avance est appliquée pour calmer le coup de cliquetis. La dégradation d'avance appliquée dépend du régime, de la charge, de l'intensité du coup de cliquetis et du temps écoulé depuis l'activation du compteur. Ainsi, la correction apportée est optimisée pour limiter l'impact sur le rendement moteur tout en protégeant le moteur contre le phénomène de coups de cliquetis.

La deuxième valeur minorée sert à diminuer l'effet de la dégradation d'avance à l'allumage qui pourrait être surestimée par rapport à la dégradation suffisante.

Contrairement à l'état de la technique le plus proche, la présente invention ne concerne pas la correction adaptative mais la correction curative du phénomène de coup de cliquetis. Il n'y a donc pas de notion d'apprentissage, c'est une action qui intervient de manière systématique à chaque détection de coup de cliquetis. Le fait de prendre en compte dans la correction curative appliquée l'intervalle de temps entre deux coups de cliquetis consécutifs permet de corriger au plus juste l'avance à l'allumage pour protéger le moteur et ne pas dégrader la consommation de manière excessive.

Avantageusement, la deuxième valeur minorée prédéterminée est comprise entre 0,2 et 0,8 fois la première valeur prédéterminée.

Avantageusement, la deuxième valeur minorée prédéterminée est de 1,5° d'angle de vilebrequin et la première valeur prédéterminée de 3°.

Avantageusement, le deuxième intervalle de temps est compris entre 0,3 et 0,7 fois le premier intervalle de temps.

Avantageusement, quand un troisième coup de cliquetis n'a pas été détecté avant la fin du premier intervalle de temps et que le premier intervalle de temps est fini, l'application de la dégradation d'avance à l'allumage curative est suspendue pour le prochain coup de cliquetis devenant le nouveau premier coup de cliquetis, ceci tant qu'un deuxième coup de cliquetis n'a été détecté dans un premier intervalle de temps prédéterminé débutant avec la détection du premier coup de cliquetis.

Avantageusement, la valeur de la dégradation d'avance à l'allumage curative alors appliquée est la première valeur nominale prédéterminée.

L'invention concerne aussi un moteur thermique comportant un contrôle moteur comprenant une unité de contrôle permettant d'éviter l'apparition de coup de cliquetis lors du fonctionnement du moteur, caractérisé en ce que l'unité de contrôle moteur fonctionne conformément à un tel procédé d'application d'une dégradation d'avance à l'allumage curative.

Ainsi en cas de fausse détection d'un coup de cliquetis, la présente invention permet de ne pas appliquer de dégradation d'avance et donc de ne pas pénaliser le rendement du moteur. En cas de bonne détection de coup de cliquetis, si le coup de cliquetis se calme seul sans dégradation d'avance, cela permet également un gain en terme de consommation.

L'optimisation de la correction curative de cliquetis permet de réduire l'occurrence des dégradations d'avance et ainsi de maximiser le rendement du moteur à combustion interne. La consommation de carburant est donc améliorée. L'agrément de conduite est également amélioré. Enfin, la présente invention permet de réduire l'impact des fausses détections de coup de cliquetis.

La mise en place de nouveaux cycles de réglementation, du type en conduite réelle ou RDE, de plus en plus sévères combinée à la volonté de réduire les consommations des moteurs essence obligent les constructeurs automobiles à optimiser les stratégies curatives afin d'appliquer des corrections au juste nécessaire sans remettre en cause la protection du moteur. Cette invention fait partie des optimisations du curatif coup de cliquetis.

D'autres caractéristiques, buts et avantages de la présente invention apparaîtront à la lecture de la description détaillée qui va suivre et au regard du dessin annexé donné à titre d'exemple non limitatif et sur lequel :

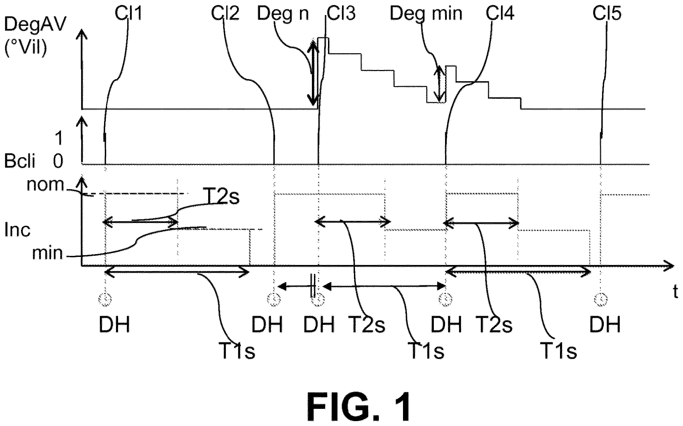

- la figure 1 montre trois courbes lors d'une mise en oeuvre du procédé selon la présente invention, la première courbe illustrant une correction curative sous la forme d'une dégradation de l'avance à l'allumage appliquée lors d'une détection d'un coup de cliquetis directement successif à un coup de cliquetis antérieur et se produisant à l'intérieur d'une première durée prédéterminée après le coup de cliquetis antérieur, la deuxième courbe illustrant un booléen variant de 0 à 1 pour la détection de coup de cliquetis à la valeur 1 et la troisième courbe illustrant une incrémentation de la dégradation de l'avance à l'allumage curative proposée avantageusement par la présente invention entre une valeur nominale et une valeur minorée.

II est à garder à l'esprit que la figure est donnée à titre d'exemple et n'est pas limitative de l'invention. Elle constitue une représentation schématique de principe destinée à faciliter la compréhension de l'invention et n'est pas nécessairement à l'échelle des applications pratiques, notamment pour l'espacement des coups de cliquetis.

Au milieu des courbes de la figure 1, le troisième coup de cliquetis pendant un premier intervalle se produit à un endroit du premier intervalle mais un troisième coup de cliquetis dans le cadre de la présente invention peut se produire n'importe quand pendant le premier intervalle.

En se référant à la figure 1, qui montre les trois courbes précédemment mentionnées en fonction du temps t, la présente invention concerne un procédé d'application d'une dégradation d'avance DegAV à l'allumage curative d'une première valeur Deg n nominale prédéterminée pour un moteur thermique après une détection d'un premier coup de cliquetis Cl1, Cl2, Cl5 lors du fonctionnement du moteur.

Selon l'invention, l'application de la dégradation d'avance DegAV à l'allumage curative est suspendue tant qu'un deuxième coup de cliquetis, à la figure le coup de cliquetis CI3, n'a été détecté dans un premier intervalle de temps T1 s prédéterminé débutant avec la détection du premier coup de cliquetis Cl1, Cl2, Cl5.

A la figure 1, en prenant le premier coup de cliquetis à gauche Cl1, ce coup de cliquetis Cl1 est détecté signalé par un booléen de coup de cliquetis Bcli passant à 1, aucun coup de cliquetis détecté se traduisant par ailleurs par un booléen de coup de cliquetis Bcli restant à 0.

Conformément à la présente invention, à la courbe du haut représentant la dégradation d'avance DegAV à l'allumage appliquée exprimée en angle de vilebrequin °Vil, il n'y a aucune dégradation d'avance DegAV mise en oeuvre pour ce premier coup de cliquetis Cl1. Un premier intervalle de temps T1s prédéterminé débute avec la détection du premier coup de cliquetis Cl1, Cl2, Cl5 ainsi qu'un deuxième intervalle de temps T2s prédéterminé plus court que le premier intervalle de temps T1s prédéterminé et qui sera ultérieurement décrit.

Dans ces conditions, à la courbe du bas, qui montre un incrément du curatif optimisé Inc variant de la première valeur Deg n nominale à une deuxième valeur Deg min minorée, cet incrément Inc du curatif optimisé reste à la première valeur Deg n nominale.

Le deuxième coup de cliquetis CI2 parvient à la fin du premier intervalle de temps T1s et est donc considéré comme un nouveau premier coup de cliquetis Cl1, Cl2, Cl5 qui fait démarrer le comptage d'un nouveau premier intervalle de temps T1s. Ainsi, après qu'un premier compte à rebours comptant le premier intervalle de temps T1s ait été remis à zéro, le prochain coup de cliquetis à venir deviendra le nouveau premier coup de cliquetis Cl2, Cl5.

En effet, le procédé selon l'invention peut comprendre une étape d'initiation d'un premier compte à rebours d'un premier intervalle de temps T1s débutant avec l'apparition du premier coup de cliquetis Cl1, Cl2, Cl5 ou d'un nouveau premier coup de cliquetis CI3, le premier compte à rebours étant remis à zéro si aucun deuxième coup de cliquetis n'a été détecté pendant le premier intervalle de temps T1s, ce qui est visible sur la gauche des deuxième et troisième courbes entre le premier coup de cliquetis Cl1 et le deuxième coup de cliquetis CI2 les plus à gauche.

En alternative, dès qu'un deuxième coup de cliquetis a été détecté, ceci étant montré pour le troisième coup de cliquetis CI3, le premier intervalle T1s est remis à zéro. Entre le deuxième coup de cliquetis CI2 et le troisième coup de cliquetis CI3 les plus à gauche, il est montré une partie du premier intervalle de temps T1s interrompu avec deux traits verticaux illustrant son interruption.

Comme précédemment mentionné, simultanément au début du premier compte à rebours, il peut être débuté un deuxième compte à rebours d'un deuxième intervalle de temps T2s inférieur au premier intervalle T1s. Les débuts des deux comptes à rebours sont référencés DH. Le premier intervalle de temps T1s et le deuxième intervalle de temps T2s peuvent être comptabilisés en secondes ou s.

Comme il sera ultérieurement décrit, ce deuxième compte à rebours peut servir à limiter en durée une dégradation d'avance DegAV à l'allumage curative d'une deuxième valeur Deg min minorée prédéterminée inférieure à la première valeur Deg n nominale prédéterminée mise en oeuvre dès qu'un troisième coup de cliquetis CI4 a été détecté pendant le premier intervalle de temps T1s en vigueur et non terminé.

Ceci peut être vu au milieu de la figure 1. Après le deuxième coup de cliquetis devenu le nouveau premier coup de cliquetis CI2 pour le coup de cliquetis suivant qui est le troisième coup de cliquetis CI3 en partant de la gauche, il est effectué une dégradation d'avance DegAV à l'allumage avec une dégradation nominale qui est la première valeur Deg n dans le sens de la présente invention.

Un quatrième coup de cliquetis CI4 peut être considéré comme un nouveau troisième coup de cliquetis en partant des nouveaux premier et deuxième coups de cliquetis que sont le deuxième coup de cliquetis CI2 et le troisième coup de cliquetis CI3 en partant de la gauche.

Le quatrième coup de cliquetis Cl4 en partant de la gauche succède donc à deux coups de cliquetis successifs Cl2 et Cl3, ce qui déclenche une dégradation d'avance DegAV à l'allumage avec une dégradation minorée qui est la deuxième valeur Deg min dans le sens de la présente invention, cette correction étant appliquée une fois.

Sans que cela soit limitatif, la deuxième valeur Deg min minorée prédéterminée peut être comprise entre 0,2 et 0,8 fois la première valeur Deg n prédéterminée. La deuxième valeur Deg min minorée prédéterminée peut être de 1,5° d'angle de vilebrequin °Vil et la première valeur Deg n prédéterminée de 3°, donc la deuxième valeur Deg min minorée peut être moitié moins que la première valeur Deg n prédéterminée. Le deuxième intervalle de temps T2s peut être compris entre 0,3 et 0,7 fois le premier intervalle de temps T1s.

A la figure 1, le quatrième coup de cliquetis CI4 en partant de la gauche devenant le nouveau troisième coup de cliquetis se produit juste avant la fin du premier intervalle T1s, ce qui est un cas particulier, le nouveau troisième coup de cliquetis devant se produire à n'importe quel moment avant la fin du premier intervalle T1s et l'arrêt du premier compte à rebours.

Quand un troisième coup de cliquetis n'a pas été détecté avant la fin du premier intervalle de temps T1s et que le premier intervalle de temps T1s est fini, l'application de la dégradation d'avance DegAV à l'allumage curative est suspendue pour le prochain coup de cliquetis. Ce prochain coup de cliquetis devient le nouveau premier coup de cliquetis, référencé CI5 à la figure 1. Ceci dure tant qu'un deuxième coup de cliquetis n'a été détecté dans un premier intervalle de temps T1s prédéterminé débutant avec la détection du premier coup de cliquetis CI5.

Dans ce cas, la valeur de la dégradation d'avance DegAV à l'allumage curative alors appliquée peut être de préférence la première valeur Deg n nominale prédéterminée.

L'invention concerne aussi un moteur thermique comportant un contrôle moteur comprenant une unité de contrôle permettant d'éviter l'apparition de coup de cliquetis lors du fonctionnement du moteur.

Selon l'invention, l'unité de contrôle moteur fonctionne conformément à un procédé d'application d'une dégradation d'avance DegAV à l'allumage curative tel que précédemment décrit.

L'invention n'est nullement limitée aux modes de réalisation décrits et illustrés qui n'ont été donnés qu'à titre d'exemple, pour autant qu'ils soient conformes aux caractéristiques des revendications ci-jointes.

## Revendications

1. Procédé d'application d'une dégradation d'avance (DegAV) à l'allumage curative d'une première valeur (Deg n) nominale prédéterminée pour un moteur thermique après une détection d'un premier coup de cliquetis (Cl1, Cl2, Cl5) lors du fonctionnement du moteur, l'application de la dégradation d'avance (DegAV) à l'allumage curative étant suspendue tant qu'un deuxième coup de cliquetis (Cl3) n'a été détecté dans un premier intervalle de temps (T1s) prédéterminé débutant avec la détection du premier coup de cliquetis (Cl1, Cl2, Cl5), comprenant une étape d'initiation d'un premier compte à rebours d'un premier intervalle de temps (T1s) débutant avec l'apparition du premier coup de cliquetis (Cl1, Cl2, Cl5), le premier compte à rebours étant remis à zéro si aucun deuxième coup de cliquetis n'a été détecté pendant le premier intervalle de temps (T1s) ou dès qu'un deuxième coup de cliquetis (Cl3) a été détecté, après que le premier compte à rebours ait été remis à zéro, le prochain coup de cliquetis à venir deviendra le nouveau premier coup de cliquetis (CI2, CI5), **caractérisé en ce que**, simultanément au début du premier compte à rebours, il est débuté un deuxième compte à rebours d'un deuxième intervalle de temps (T2s) inférieur au premier intervalle (T1s), ce deuxième compte à rebours servant à limiter en durée une dégradation d'avance (DegAV) à l'allumage curative d'une deuxième valeur (Deg min) minorée prédéterminée inférieure à la première valeur (Deg n) nominale prédéterminée mise en oeuvre dès qu'un troisième coup de cliquetis (CI4) a été détecté pendant le premier intervalle de temps (T1s) en vigueur et non terminé.

2. Procédé selon la revendication précédente, dans lequel la deuxième valeur (Deg min) minorée prédéterminée est comprise entre 0,2 et 0,8 fois la première valeur (Deg n) prédéterminée.

3. Procédé selon la revendication précédente, dans lequel la deuxième valeur (Deg min) minorée prédéterminée est de 1,5° d'angle de vilebrequin (°Vil) et la première valeur (Deg n) prédéterminée de 3°.

4. Procédé selon l'une quelconque des revendications précédentes, dans lequel le deuxième intervalle de temps (T2s) est compris entre 0,3 et 0,7 fois le premier intervalle de temps (T1s).

5. Procédé selon l'une quelconque des revendications précédentes, dans lequel, quand un troisième coup de cliquetis n'a pas été détecté avant la fin du premier intervalle de temps (T1s) et que le premier intervalle de temps (T1s) est fini, l'application de la dégradation d'avance (DegAV) à l'allumage curative est suspendue pour le prochain coup de cliquetis devenant le nouveau premier coup de cliquetis (CI5), ceci tant qu'un deuxième coup de cliquetis n'a été détecté dans un premier intervalle de temps (T1s) prédéterminé débutant avec la détection du premier coup de cliquetis (Cl1, Cl2, Cl5).

6. Procédé selon la revendication précédente, dans lequel la valeur de la dégradation d'avance (DegAV) à l'allumage curative alors appliquée est la première valeur (Deg n) nominale prédéterminée.

7. Moteur thermique comportant un contrôle moteur comprenant une unité de contrôle permettant d'éviter l'apparition de coup de cliquetis lors du fonctionnement du moteur, **caractérisé en ce que** l'unité de contrôle moteur fonctionne conformément à un procédé d'application d'une dégradation d'avance (DegAV) à l'allumage curative selon l'une quelconque des revendications précédentes.

## Patentansprüche

1. Verfahren zum Anwenden einer Vorverschlechterung (DegAV) auf die heilende Zündung eines ersten vorgegebenen Nennwerts (Deg n) für einen Wärmemotor nach Erkennung eines ersten Klopfens (Cl1, Cl2, Cl5) während des Betriebs des Motors, die Anwendung von der vorzeitigen Verschlechterung (DegAV) zur heilenden Zündung ausgesetzt wird, bis ein zweites Klopfen (C13) in einem ersten vorgegebenen Zeitintervall (T1s) erfasst wird, beginnend mit der Erkennung des ersten Klickgeräuschs (Cl1, C12, C15), umfassend einen Schritt zum Initiieren eines ersten Countdowns eines ersten Zeitintervalls (T1s), beginnend mit dem Erscheinen des ersten Klicks (Cl1, C12, C15), wobei der erste Countdown auf Null zurückgesetzt wird, wenn während des ersten Zeitintervalls (T1s) kein zweiter Klick erkannt wurde ) oder sobald ein zweites Klicken (C13) erkannt wurde, nachdem der erste Countdown auf Null zurückgesetzt wurde, wird das nächste bevorstehende Klopfen zum neuen ersten Klopfen (C12, C15), **dadurch gekennzeichnet, dass** gleichzeitig mit dem Start von Nach dem ersten Countdown wird ein zweiter Countdown mit einem zweiten Zeitintervall (T2s) gestartet, das kürzer als das erste Intervall (T1s) ist, wobei dieser zweite Countdown dazu dient, die Dauer einer vorzeitigen Verschlechterung (DegAV) auf die heilende Zündung um einen zweiten vorgegebenen reduzierten Wert zu begrenzen (Deg min) niedriger als der erste vorgegebene Nennwert (Deg n) wird umgesetzt, sobald ein drittes Klopfen (C14) während des ersten aktiven Zeitintervalls (T1s) erkannt und nicht abgeschlossen wurde.

2. Verfahren nach dem vorhergehenden Anspruch, bei dem der zweite vorgegebene reduzierte Wert (Deg min) zwischen dem 0,2- und 0,8-fachen des ersten vorgegebenen Werts (Deg n) liegt.

3. Verfahren nach dem vorhergehenden Anspruch, bei dem der zweite vorgegebene reduzierte Wert (Deg min) 1,5° des Kurbelwellenwinkels (°Vil) beträgt und der erste vorgegebene Wert (Deg n) 3° beträgt.

4. Verfahren nach einem der vorhergehenden Ansprüche, bei dem das zweite Zeitintervall (T2s) zwischen dem 0,3- und 0,7-fachen des ersten Zeitintervalls (T1s) beträgt.

5. Verfahren nach einem der vorhergehenden Ansprüche, bei dem, wenn vor dem Ende des ersten Zeitintervalls (T1s) kein drittes Klickgeräusch erkannt wurde und das erste Zeitintervall (T1s) beendet ist, die Anwendung des Vorlaufs erfolgt Der Abbau (DegAV) zur heilenden Zündung wird ausgesetzt, bis das nächste Klopfen zum neuen ersten Klopfen wird (C15), solange kein zweites Klopfen in einem ersten vorgegebenen Zeitintervall (T1s) beginnend mit der Erkennung des ersten Klickens erkannt wurde Ton (Cl1, C12, C15).

6. Verfahren nach dem vorhergehenden Anspruch, bei dem der dann angewandte Wert der Vorverschlechterung (DegAV) bei heilender Zündung der erste vorgegebene Nennwert (Deg n) ist.

7. Wärmekraftmaschine mit einer Motorsteuerung, die eine Steuereinheit umfasst, die es ermöglicht, das Auftreten von Klopfen während des Motorbetriebs zu vermeiden, **dadurch gekennzeichnet, dass** die Motorsteuereinheit nach einem Verfahren zur Anwendung einer kurativen Zündverstellungsverschlechterung (DegAV) arbeitet, nach einem der vorhergehenden Ansprüche.

## Claims

1. Method for applying an advance degradation (DegAV) to the curative ignition of a first predetermined nominal value (Deg n) for a heat engine after detection of a first knock (Cl1, Cl2 , C15) during operation of the engine, the application of advance degradation (DegAV) to curative ignition being suspended until a second knock (C13) has been detected in a first time interval (T1s) predetermined starting with the detection of the first clicking sound (Cl1, C12, C15), comprising a step of initiating a first countdown of a first time interval (T1s) starting with the appearance of the first click (Cl1, C12, C15), the first countdown being reset to zero if no second click has been detected during the first time interval (T1s) or as soon as a second click (C13) has been detected, after the first countdown has been reset to zero, the next upcoming knock will become the new first knock (C12, C15), **characterized in that**, simultaneously with the start of the first countdown, a second countdown of a second time interval (T2s) less than the first interval (T1s) is started, this second countdown serving to limit in duration an advance degradation (DegAV) to the curative ignition of a second predetermined reduced value (Deg min) lower than the first predetermined nominal value (Deg n) implemented as soon as a third knock (C14) has been detected during the first time interval (T1s ) in force and not completed.

2. Method according to the preceding claim, in which the second predetermined reduced value (Deg min) is between 0.2 and 0.8 times the first predetermined value (Deg n).

3. Method according to the preceding claim, in which the second predetermined reduced value (Deg min) is 1.5° of crankshaft angle (°Vil) and the first predetermined value (Deg n) is 3°.

4. Method according to any one of the preceding claims, in which the second time interval (T2s) is between 0.3 and 0.7 times the first time interval (T1s).

5. Method according to any one of the preceding claims, in which, when a third clicking sound has not been detected before the end of the first time interval (T1s) and the first time interval (T1s) is finished , the application of advance degradation (DegAV) to curative ignition is suspended for the next knock becoming the new first knock (C15), this as long as a second knock has not been detected in a first predetermined time interval (T1s) beginning with the detection of the first clicking sound (Cl1, C12, C15).

6. Method according to the preceding claim, in which the value of the advance degradation (DegAV) at curative ignition then applied is the first predetermined nominal value (Deg n).

7. Heat engine comprising an engine control comprising a control unit making it possible to avoid the appearance of knocking during operation of the engine, **characterized in that** the engine control unit operates in accordance with a method of applying a curative ignition advance degradation (DegAV) according to any one of the preceding claims.
